# FASCICULE DE BREVET EUROPEEN

(11) **EP 1 015 792 B1**
(45) Date de publication et mention de la délivrance du brevet: **11.06.2003**
(21) Numéro de dépôt: 99932914.7
(22) Date de dépôt: 19.07.1999
(51) Int. Cl.: F16F 15/134, F16F 15/139

(54) **DISPOSITIF AMORTISSEUR DE TORSION METTANT EN OEUVRE DES MONTAGES A ARTICULATION NE GENERANT PAS DE BRUIT EN FONCTIONNEMENT**
TORSIONSDÄMPFUNGSVORRICHTUNG MIT GELENKEINRICHTUNGEN DIE IN BETRIEB GERÄUSCHLOS SIND
TORQUE DAMPING DEVICE USING ARTICULATED MOUNTING NOISE-FREE WHEN OPERATING

(30) Priorité: 20.07.1998 FR 9809211
(43) Date de publication de la demande: 05.07.2000
(73) Titulaire: VALEO EMBRAYAGES s.a.s., 80009 Amiens Cedex 1 (FR)
(72) Inventeur: BERTIN, Patrice, F-95540 Méry-sur-Oise (FR); LUSSON, Stéphane, F-92800 Puteaux (FR); TARDIVEAU, Christophe, F-75018 Paris (FR)
(74) Mandataire: Gamonal, Didier
(86) Numéro de dépôt international: FR9901767
(87) Numéro de publication internationale: WO00005519

(56) Documents cités:
- EP-A- 0 797 024
- US-A- 5 732 604

## Description

L'invention a pour objet un dispositif amortisseur de torsion, notamment pour véhicules automobiles, comportant deux masses coaxiales montées à articulation mobiles l'une par rapport à l'autre à l'encontre, d'une part, de moyens élastiques comportant au moins un organe élastique intervenant globalement radialement entre lesdites masses et monté à articulation sur l'une et l'autre de celles-ci, et, d'autre part, de moyens de frottement à action axiale, dans lequel l'une des masses, dite première masse, est propre à être calée en rotation sur un arbre menant, tandis que l'autre des masses, dite seconde masse, constitue le plateau de réaction d'un embrayage, les moyens de frottement étant implantés axialement entre la première masse et lesdits moyens élastiques. Un tel dispositif est connu du document EP-A-0 797 024.

Ces montages à articulation mettent en oeuvre un contre-matériau comportant une portée de frottement destinée à coopérer en frottement avec une matière de frottement.

On connaît des contre-matériaux notamment du type métalliques ; leur portée de frottement peut être plane ou cylindrique ; dans ce dernier cas, ils permettent la réalisation de paliers.

Lorsque la matière de frottement avec laquelle coopère un contre-matériau est sujette à l'usure, celle-ci est minimisée lorsque la portée de frottement du contre-matériau est durcie et est la moins rugueuse possible ; toutefois, des bruits sont générés en fonctionement.

La présente invention a pour but d'éviter ces inconvénients.

Ainsi, selon l'invention, un dispositif amortisseur du type ci-dessus, dans lequel l'un au moins des montages à articulation met en oeuvre un contre-matériau comportant une portée de frottement destinée à coopérer en frottement avec une matière de frottement, est caractérisé par le fait que ladite portée de frottement est constituée d'un revêtement lubrifiant solide dont le coefficient de frottement dynamique est au plus égal à 0,25.

Avantageusement, le revêtement est du graphite.

De préférence, le revêtement est une matière organique, avantageusement du Poly (tétrafluoréthylène), en variante un polyimide.

Avantageusement, le revêtement est métallique.

Avantageusement, le revêtement est constitué de particules lamellaires de zinc.

De préférence, le revêtement est du type quasi-cristallin, comportant avantageusement des atomes d'aluminium.

Avantageusement, ledit au moins un organe élastique est monté à articulation sur la première masse par l'intermédiaire d'un premier axe et sur la seconde masse par l'intermédiaire d'un second axe, l'un au moins des premier et second axes présentant ladite portée de frottement avec laquelle coopère à articulation l'organe élastique.

De préférence, les premier et second axes présentent tous deux une telle portée de frottement.

Avantageusement, ladite portée de frottement coopère en frottement avec un palier en matière de frottement porté par l'organe élastique.

De préférence, les deux masses sont montées mobiles l'une par rapport à l'autre à l'aide d'un palier en matière de frottement interposé radialement entre un moyeu solidaire de l'une des masses et un alésage interne de l'autre des masses et ledit palier coopère en frottement avec ledit moyeu et/ou ledit alésage, lequel présente ladite portée de frottement.

Avantageusement, la matière de frottement est une matière plastique.

De préférence, la matière plastique est un polyimide ou un polyamide.

De préférence, la matière plastique est du Poly (éther éther cétone).

Avantageusement, ladite l'une des masses est la seconde masse et la au moins une face de frottement est solidaire en rotation de la première masse.

La description qui va suivre illustre l'invention en regard des dessins annexés dans lesquels :
- la figure 1 est une vue en coupe axiale d'un volant amortisseur selon l'invention ;
- la figure 2 est une vue montrant les moyens élastiques, à plus grande échelle, du volant de la figure 1 ;
- la figure 3 est une vue à plus grande échelle de la partie inférieure de la figure 1.

Sur les figures, est illustré un volant amortisseur, dénommé usuellement double volant amortisseur. pour véhicules automobiles.

Ce volant amortisseur comporte deux parties coaxiales 1, 2 ou masses montées mobiles l'une par rapport à l'autre à l'encontre de moyens élastiques 3 globalement à action radiale.

La première masse 1 est destinée à être calée en rotation sur un arbre menant, ici sur le vilebrequin du moteur à combustion interne du véhicule.

La seconde masse 2 est destinée à être calée en rotation sur un arbre mené, ici l'arbre d'entrée de la boite de vitesses (non visible) du véhicule automobile.

Cette seconde masse 2 est montée tourillonnante sur un moyeu tubulaire 12 porté par la première masse 1.

Cette première masse 1 comporte un plateau 11 portant à sa périphérie externe une couronne de démarreur 13 propre à être entraînée par le démarreur du véhicule.

Ce plateau 11 est doté à sa périphérie externe d'un rebord cylindrique 19 d'orientation axiale.

Ici le moyeu 12 est d'un seul tenant avec le plateau 11 et constitue ainsi la partie centrale de la première masse 1. En variante, le moyeu 12 peut être rapporté sur le plateau 11.

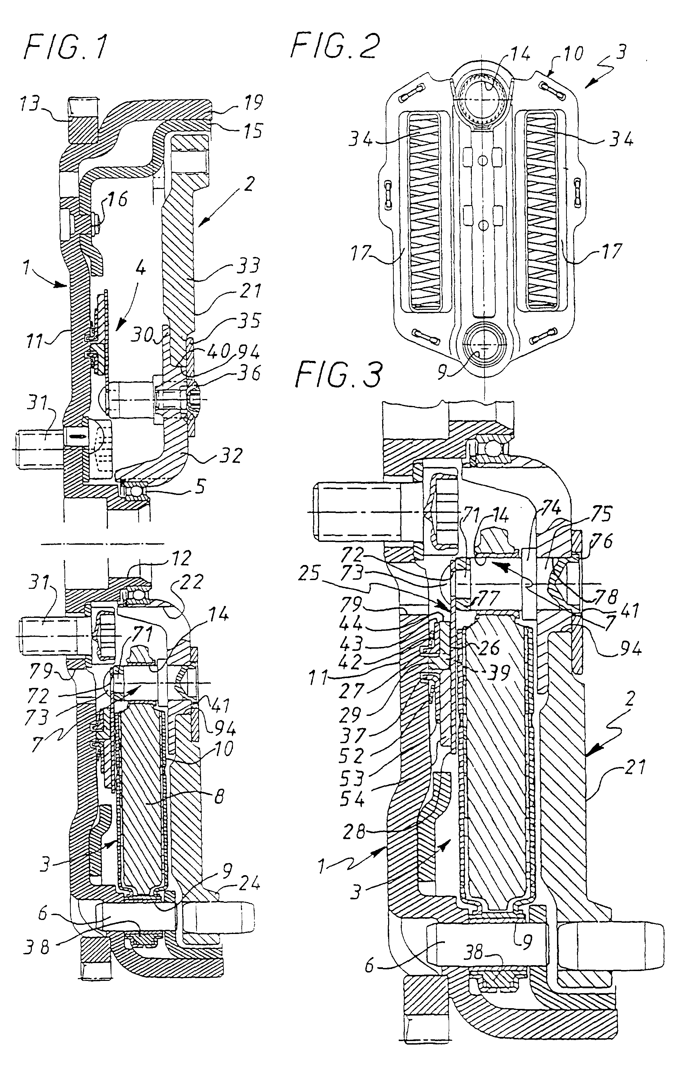

La seconde masse 2 est montée tournante sur la masse 1 par l'intermédiaire d'un palier 5 et constitue le plateau de réaction d'un embrayage à friction comportant, de manière connue en soi, un disque de friction, un plateau de pression, un diaphragme et un couvercle non visibles sur la figure 1.

Le diaphragme, de manière connue en soi, prend appui sur le couvercle, adapté à être rapporté ici sur un rebord périphérique cylindrique d'orientation axiale 24 que présente la seconde masse 2 à sa périphérie externe, pour action sur le plateau de pression et serrage des garnitures de frottement du disque de friction entre ledit plateau de pression et la seconde masse 2 présentant à cet effet une face de friction 21 pour le disque de friction. Ce disque de friction est doté à sa périphérie interne d'un moyeu non visible calé en rotation sur l'arbre d'entrée de la boîte de vitesses.

Le diaphragme de l'embrayage est adapté à être actionné, de manière connue en soi, par une butée de débrayage (non visible).

Normalement, l'embrayage est engagé et le disque de friction est serré entre la seconde masse 2 et le plateau de pression de l'embrayage.

Pour désengager l'embrayage, il suffit d'agir à l'aide de la butée de débrayage pour faire pivoter celui-ci.

La seconde masse 2 est donc calée en rotation de manière débrayable sur l'arbre mené par l'intermédiaire de l'embrayage à friction.

Ici le palier 5 consiste en un roulement à billes de taille réduite. En variante, il peut s'agir d'un palier lisse. Le palier 5 est interposé radialement entre le moyeu 12 de la première masse 1 et la périphérie interne (l'alésage interne) de la seconde masse 2.

Le moyeu 12 est épaulé, ainsi que l'alésage interne de la deuxième masse 2.

Le calage axial du palier 5 est réalisé grâce auxdits épaulements et à des circlips (non référencés) engagés dans des gorges pratiquées dans le moyeu 12 et dans la seconde masse 2. Ce palier 5 s'étend radialement en dessous de passages 22 prévus dans la seconde masse 2 pour passage des outils de vissage des vis 31, ici à tête creuse, de fixation du volant amortisseur sur le vilebrequin. Les passages 22 sont donc en coïncidence avec les trous pratiqués dans le plateau 11 pour le passage du filetage des vis 31.

Les deux masses 1, 2 sont montées mobiles l'une par rapport à l'autre à l'encontre, d'une part, des moyens élastiques 3 comportant au moins un organe élastique 34 intervenant globalement radialement entre lesdites masses et monté à articulation sur l'une et l'autre de celles-ci, et, d'autre part, de moyens de frottement à action axiale 4.

Ici plusieurs organes élastiques 34 sont prévus et ceux-ci sont montés dans au moins une cassette articulée comportant, d'une part, un boîtier 10 de forme hexagonale oblongue avec un palier 9 et doté de logements 17 pour montage des organes élastiques 34, ici en forme de ressorts à boudin, et, d'autre part, un tiroir 8 en forme d'ancre muni d'un palier 14.

C'est donc par l'intermédiaire des cassettes que les organes élastiques 34 sont montés à articulation sur l'une et l'autre des masses 1, 2.

Ici deux organes élastiques 34 sont prévus par cassette, lesdits organes élastiques 34 s'étendant parallèlement l'un à l'autre dans la cassette. Les logements 17 consistent ici en des fenêtres comme mieux visible à la figure 2.

Le boîtier 10 et le tiroir 8 sont montés tête-bêche, le palier 9 du boîtier 10 servant au montage de premiers moyens d'articulation 6 sur la première masse 1, tandis que le palier 14 du tiroir 8 sert au montage de seconds moyens d'articulation 7 sur la seconde masse 2.

Les moyens d'articulation 6 et 7, qui ici sont radialement alignés, sont décalés radialement l'un par rapport à l'autre. En variante un léger décalage circonférentiel peut exister. Les moyens élastiques 3 sont donc globalement à action radiale.

ici les moyens d'articulation 6 et 7 consistent en des axes. Les axes 6 sont implantés à la périphérie externe de la première masse 1, tandis que les axes 7 sont implantés à la périphérie interne de la seconde masse 2, ici radialement au-dessus des passages 22 des vis de fixation 31, au voisinage desdits passages.

L'axe 6 est emmanché à force dans la première masse 1 à la périphérie externe de celle-ci et s'étend axialement en direction de la seconde masse 2. Son extrémité libre est emmanchée dans une pièce 15 fixée à l'aide de rivets 16 sur le plateau 11 de la première masse 1. La pièce 15 rigidifie la première masse 1 en étant adjacente à la seconde masse 2 et en contact avec le rebord 19.

Un manchon 38 est interposé axialement entre le plateau 11 et cette pièce 15. Il est formé ainsi une chape pour le montage de l'axe 6, qui est ainsi bien soutenu. Ce montage permet également un calage axial de la cassette.

Selon l'invention, l'un au moins des axes 6 et 7, et de préférence les deux, présente une portée de frottement constituée d'un revêtement lubrifiant solide dont le coefficient de frottement dynamique est au plus égal à 0,25 ; de bons résultats ont été obtenus avec un revêtement en graphite, les axes 6 et 7, eux-mêmes, étant en acier, durci ou non.

De bons résultats ont été également obtenus avec un revêtement organique, tel que du Poly (tétrafluoréthylène) ou PTFE, ou un polyimide.

Ledit revêtement peut également être du type métallique, et constitué de particules lamellaires de zinc.

D'autres bons résultats ont été obtenus avec un revêtement du type quasi-cristallin : le quasi-cristal comporte un arrangement non périodique mais ordonné d'atomes Al-Li-Cu ou Al-Fe-Cu ou Al-Ni-Co ou Al-Cu-Co ou Al-Pd-Mn.

Ces revêtements sont avantageusement déposés par projection thermique.

Dans les exemples ci-dessus, les paliers 9 et 14, qui cooperaient en frottement avec ces revêtements, étaient en matière de frottement constituée d'une matière plastique, un polyimide ou du Poly (éther éther cétone) ou PEEK.

Sur les figures, les deux masses 1, 2 sont montées mobiles l'une par rapport à l'autre à l'aide d'un roulement à billes 5 interposé radialement entre un moyeu 12 solidaire de la première masse 1 et un alésage interne de la seconde masse 2 ; comme déjà dit ci-dessus, selon une variante non représentée, le roulement à billes est remplacé par un palier lisse ; selon l'invention, ce palier en matière de frottement, telle que la matière des paliers 9 et 14 décrite ci-dessus, coopère en frottement avec un revêtement porté par le moyeu 12 et/ou par l'alésage interne de la seconde masse 2, lequel revêtement est du type de celui décrit à propos des axes 6 et 7.

Les moyens de frottement 4 à action axiale interviennent également entre les deux masses 1 et 2. Ces moyens de frottement comportent usuellement au moins une première rondelle de frottement 44.

Ces moyens de frottement 4 sont implantés axialement entre la première masse 1 et les moyens élastiques 3. Ces moyens de frottement 4 s'étendent au-dessus des vis de fixation 31, un jeu axial existant entre les boîtiers 10 et les moyens de frottement 4.

La rondelle 44 est soumise à l'action d'une première rondelle d'application 43 sur laquelle agit un premier moyen élastique à action axiale 42 prenant appui sur le plateau 11 de la première masse 1.

La rondelle d'application 43 présente des pattes axiales 27 coopérant avec des logements ou échancrures ménagés dans le plateau 11 pour son entraînement en rotation, avec ou sans jeu, par ledit plateau 11.

Dans l'espace axial compris entre le plateau 11 de la première masse 1 et les moyens élastiques 3, est disposée une seconde rondelle de frottement 54 coopérant, d'un côté, avec une seconde rondelle d'application 53 qui lui est associée et qui est soumise à l'action d'un second moyen élastique 52 à action axiale prenant appui sur le plateau 11 ; des moyens d'engrènement 29, 39, respectivement, sont portés en vis-à-vis par la première 44 et par la seconde 54 rondelles de frottement pour l'entraînement en rotation, avantageusement après absorption d'un jeu circonférentiel, de la seconde rondelle de frottement 54 par la première rondelle de frottement 44.

Ici, la seconde rondelle de frottement 54 s'étend radialement au dessus de la première rondelle de frottement 44, dans le plan de celle-ci. Elle est donc disposée transversalement au droit de la première rondelle 44 et entoure ladite rondelle 44.

Les moyens d'engrènement 29, 39 agissent entre la périphérie externe de la première rondelle 44 et la périphérie interne de la seconde rondelle 54.

Par exemple, des dents de la seconde rondelle 54 pénètrent à jeu dans des échancrures de la première rondelle 44 et vice versa.

On notera que les rondelles 44, 54 sont plus épaisses respectivement à leurs périphéries externe et interne pour formation des moyens d'engrènement à jeu.

La rondelle d'application 53 associée à la seconde rondelle de frottement 54 est solidaire en rotation de la première masse 1 grâce à des pattes axiales 37 qu'elle comporte et qui coopèrent avec des logements ou échancrures ménagés dans le plateau 11 pour son entraînement en rotation, avec ou sans jeu, par ledit plateau 11.

Les seconds axes 7 portés par la seconde masse sont également portés par une rondelle 25 d'orientation globalement transversale en forme de plaque, perpendiculaire à l'axe de l'ensemble, qui entraîne en rotation la première rondelle de frottement 44 ; pour ce faire, la première rondelle de frottement 44 est solidarisée à la rondelle 25 par exemple par une pellicule de colle 26.

Chaque axe 7 comporte une partie médiane de grand diamètre, recevant à rotation le palier 14 des moyens élastiques 3, qui se prolonge axialement par un tronçon de diamètre réduit 71 qui traverse un trou 72 formé dans le bord radial interne de la rondelle 25 et qui fait saillie axialement au delà de la face transversale 28 de la rondelle 25 tournée vers le plateau 11 pour permettre la fixation de l'axe 7 sur la rondelle 25 par sertissage axial aboutissant à la réalisation d'une tête sertie 73.

La portion médiane de grand diamètre de chaque axe 7 se prolonge, à l'opposé, d'une collerette 74 de diamètre légèrement plus grand pour appui de l'axe 7 sur la face intérieure de la portion centrale de la seconde masse 2 ; au delà de la collerette 74, l'axe 7 se prolonge selon une portion d'extrémité 75, de diamètre légèrement inférieur à celui de la collerette 74, creusée en bout et dont le bord est serti en 76 sur la face extérieure de la portion centrale de la seconde masse 2 pour solidarisation de l'axe 7 avec ladite seconde masse 2, après que chaque portion d'extrémité 75 a traversé un trou 78 ménagé dans la seconde masse 2.

La position axiale des axes 7 est déterminée du fait de la collerette 74 et celle de la rondelle 25 est déterminée du fait de l'épaulement qui délimite le tronçon 71 par rapport à la portion médiane et du fait de la rondelle entretoise 77.

La fixation des seconds axes 7 sur la rondelle 25 permet de réaliser un sous-ensemble, constitué par la rondelle 25 et la série des seconds axes 7, qui est mis en place axialement de manière très aisée en introduisant les axes 7 dans les paliers 14 des moyens élastiques 3 puis dans les trous 78 de la seconde masse 2.

Pour permettre l'opération de fixation par sertissage 76, des passages 79 sont formés en alignement axial dans la partie radiale interne du plateau 11 de la première masse 1 afin d'introduire un outil de réaction prenant appui contre les têtes 73.

Comme le montrent les figures, la seconde rondelle de frottement 54 est serrée élastiquement par le moyen élastique à action axiale 52 entre la rondelle d'application 53 et la face transversale 28 de la rondelle 25. Ainsi, lors du mouvement relatif en rotation des première 1 et seconde 2 masses, la première rondelle de frottement 44 est adaptée à coopérer en frottement uniquement avec la rondelle d'application 43 qui lui est associée, et la seconde rondelle de frottement 54 est adaptée à coopérer en frottement avec la rondelle d'application 53 qui lui est associée et avec la face transversale 28 de la rondelle 25.

Dans le but d'augmenter les performances du double volant amortisseur, la deuxième masse 2 est réalisée en deux parties 32 et 33.

La première partie 32, par l'intermédiaire de son alésage intérieur, est montée à rotation par rapport au moyeu 12 de la première masse 1 avec interposition des moyens de palier 5. Cette première partie 32 comporte un tronçon central qui se prolonge radialement vers l'extérieur par un voile 30 qui s'étend radialement depuis la surface cylindrique extérieure 40 du tronçon central.

Cette surface cylindrique extérieure 40 constitue une surface de portée cylindrique de manière que le tronçon central constitue un moyeu qui reçoit à rotation la portion centrale en forme de voile de la seconde partie 33 de la deuxième masse 2, constituant le plateau de réaction de l'embrayage.

Cette seconde partie 33 présente une forme générale de plateau en forme de disque annulaire qui s'étend dans un plan transversal et qui porte la face de friction 21.

La portion centrale de la seconde partie 33 est montée avec possibilité de rotation sur la surface de portée 40 par l'intermédiaire de son alésage intérieur 94 qui permet la mise en place de ladite portion centrale axialement sur le moyeu jusqu'à ce que la portion de la face transversale intérieure de la portion centrale vienne en appui contre la zone en vis-à-vis de la face transversale extérieure du voile.

Des moyens limiteurs de couple sont interposés entre les première 32 et seconde 33 parties de la deuxième masse 2.

Les moyens limiteurs de couple sont du type à friction et de forme générale annulaire. Ils sont agencés radialement autour du tronçon central formant moyeu de la première partie 32. Ils sont constitués pour l'essentiel par la portion centrale et le voile contre la face transversale extérieure duquel la portion centrale est sollicitée en appui axial.

L'effort de pression axiale de la portion centrale, latéralement de la droite vers la gauche en considérant les figures, est exercé par une rondelle élastique 35 fixée sur le moyeu central de la première partie 32 par des vis 36 réparties angulairement de manière régulière.

Afin de permettre de réaliser la fixation des axes 7 par sertissage, en regard de la portion d'extrémité 75 des axes 7, la rondelle élastique 35 comporte une série de trous 41.

On a ainsi réalisé des moyens d'accouplement à friction entre les deux parties 32 et 33 de la deuxième masse tournante 2 qui sont des moyens limiteurs de couple, c'est-à-dire qu'ils permettent une rotation relative des deux parties 32 et 33 l'une par rapport à l'autre lorsque le couple appliqué à l'une des deux parties par rapport à l'autre est supérieur à une valeur de tarage déterminée par la structure des moyens d'accouplement à friction et notamment par la rondelle élastique 35.

A cet effet, la rondelle élastique 35 peut être réalisée sous la forme d'une rondelle Belleville, en variante d'un diaphragme, ou d'une rondelle ondulée.

Ici les moyens élastiques 3 comportent quatre cassettes réparties régulièrement circulairement et donc quatre axes 6 et quatre axes 7. Bien entendu, cela dépend des applications. Dans la position de repos les cassettes s'étendent radialement.

Ainsi les cassettes s'inclinent lors du mouvement relatif entre les deux masses 1, 2, les organes élastiques 34 sont comprimés et la première rondelle de frottement 44 est entraînée en rotation par la rondelle 25. Les moyens élastiques 3 sont ainsi globalement à action radiale. Cette première rondelle de frottement 44 étant serrée par la rondelle d'application 43 entraînée en rotation par le plateau 11, il se produit un mouvement relatif et un frottement, taré par le moyen élastique à action axiale 42, entre la rondelle de frottement 44, liée en rotation à la rondelle 25, et la face concernée de la rondelle d'application 43. La rondelle de frottement 54 frotte soit sur la face de frottement 28, soit sur la rondelle d'application 53.

Le jeu circonférentiel entre les moyens d'engrènement 29, 39 ayant été rattrapé et le mouvement relatif entre les deux masses 1,2 se poursuivant, la première rondelle de frottement 44 entraîne la seconde rondelle de frottement 54 qui frotte alors, d'une part, sur la face de frottement 28 et, d'autre part, sur la face concernée de la rondelle d'application 53, frottement qui est taré par le moyen élastique 52. Ainsi, la première rondelle de frottement 44 est une rondelle à frottement constant car elle frotte en permanence contre la première rondelle d'application 43. La seconde rondelle de frottement 54 frotte en permanence soit sur la face 28, soit sur la rondelle 53. Après annulation du jeu des moyens d'engrènement 29, 39, les deux faces de la rondelle 54 sont actives. Ainsi, dans une première phase, deux faces de frottement sont actives et, dans une deuxième phase, trois faces de frottement sont actives. Le tarage élastique des rondelles 42, 52 dépend, bien entendu, des applications. Bien évidemment, en créant un jeu circonférentiel entre les pattes 27, 37 des rondelles d'application 43, 53 et les logements associés du plateau 11, la première rondelle 44 peut ne pas intervenir durant une première phase.

Bien entendu, la présente invention n'est pas limitée aux exemples de réalisation décrits. En particulier, les moyens élastiques à action axiale 42 et/ou 52 peuvent consister en un diaphragme, comme, en variante, en une rondelle Belleville, ou en une rondelle élastique ondulée.

Les moyens élastiques 3 peuvent ne comporter qu'un seul ressort 34 par cassette comme décrit dans le document WO 94/27062.

On peut remplacer les axes 6 et 7 par des tourillons venus de moulage respectivement de la première masse 1 et de la seconde masse 2, en sorte que les moyens d'articulation 6, 7 ne sont pas forcément des axes.

## Revendications

1. Dispositif amortisseur de torsion comportant deux masses coaxiales (1,2) montées à articulation mobiles l'une par rapport à l'autre à l'encontre, d'une part, de moyens élastiques (3) comportant au moins un organe élastique (34) intervenant globalement radialement entre lesdites masses et monté à articulation sur l'une et l'autre de celles-ci, et, d'autre part, de moyens de frottement à action axiale (4), dans lequel l'une (1) des masses (1, 2), dite première masse, est propre à être calée en rotation sur un arbre menant, tandis que l'autre (2) des masses (1,2), dite seconde masse, constitue le plateau de réaction d'un embrayage, les moyens de frottement (4) étant implantés axialement entre la première masse (1) et lesdits moyens élastiques (3), l'un au moins des montages à articulation mettant en oeuvre un contre-matériau comportant une portée de frottement destinée à coopérer en frottement avec une matière de frottement, **caractérisé par le fait que** ladite portée de frottement est constituée d'un revêtement lubrifiant solide dont le coefficient de frottement dynamique est au plus égal à 0,25.

2. Dispositif amortisseur de torsion selon la revendication 1, **caractérisé par le fait que** le revêtement est du graphite.

3. Dispositif amortisseur de torsion selon la revendication 1, **caractérisé par le fait que** le revêtement est une matière organique.

4. Dispositif amortisseur de torsion selon la revendication 3, **caractérisé par le fait que** le revêtement est du Poly(tétrafluoréthylène).

5. Dispositif amortisseur de torsion selon la revendication 3, **caractérisé par le fait que** le revêtement est un polyimide ou un polyamide.

6. Dispositif amortisseur de torsion selon la revendication 1, **caractérisé par le fait que** le revêtement est métallique.

7. Dispositif amortisseur de torsion selon la revendication 6, **caractérisé par le fait que** le revêtement est constitué de particules lamellaires de zinc.

8. Dispositif amortisseur de torsion selon la revendication 6, **caractérisé par le fait que** le revêtement est du type quasi-cristallin.

9. Dispositif amortisseur de torsion selon la revendication 8, **caractérisé par le fait que** le revêtement du type quasi-cristallin comporte des atomes d'aluminium.

10. Dispositif amortisseur de torsion selon la revendication 1, **caractérisé par le fait que** ledit au moins un organe élastique (34) est monté à articulation sur la première masse (1) par l'intermédiaire d'un premier axe (6) et sur la seconde masse (2) par l'intermédiaire d'un second axe (7), l'un au moins des premier (6) et second (7) axes présentant ladite portée de frottement avec laquelle coopère à articulation l'organe élastique (34).

11. Dispositif amortisseur de torsion selon la revendication 10, **caractérisé par le fait que** les premier (6) et second (7) axes présentent tous deux ladite portée de frottement.

12. Dispositif amortisseur de torsion selon l'une des revendications 10 ou 11, **caractérisé par le fait que** ladite portée de frottement coopère en frottement avec un palier (9,14) en matière de frottement porté par l'organe élastique (34).

13. Dispositif amortisseur de torsion selon l'une des revendications 10 à 12, dans lequel les deux masses (1,2) sont montées mobiles l'une par rapport à l'autre à l'aide d'un palier en matière de frottement interposé radialement entre un moyeu solidaire de l'une des masses et un alésage interne de l'autre des masses, **caractérisé par le fait que** ledit palier coopère en frottement avec ledit moyeu et/ou ledit alésage, lequel présente ladite portée de frottement.

14. Dispositif amortisseur de torsion selon l'une des revendications 12 ou 13, **caractérisé par le fait que** la matière de frottement est une matière plastique.

15. Dispositif amortisseur de torsion selon la revendication 14, **caractérisé par le fait que** la matière plastique est un polyimide.

16. Dispositif amortisseur de torsion selon la revendication 14, **caractérisé par le fait que** la matière plastique est du Poly (éther éther cétone).

17. Dispositif amortisseur de torsion selon la revendication 1, **caractérisé par le fait que** ladite l'une des masses (1,2) est la seconde masse (2) et la au moins une face de frottement est solidaire en rotation de la première masse (1).

## Claims

1. Torque damping device including two coaxial masses (1,2) in an articulated mounting, capable of moving relative to each other in opposition to, first, elastic means (3) including at least one elastic contrivance (34), acting radially overall between the said masses and articulated with both of these and, second, friction means acting axially (4) in which one (1) of the masses (1, 2), termed the first mass, is able to be fixed to rotate with a drive shaft, whereas the other (2) of the masses (1,2), termed the second mass, forms a clutch thrust plate, the friction means (4) being fitted axially between the first mass (1) and the said elastic means (3), at least one of the articulated mountings producing a counterpart including a friction plate intended to come into frictional contact with a friction material, **characterised in that** the said friction plate is formed from a solid lubricant coating whose dynamic coefficient of friction is equal to at least 0.25.

2. Torque damping device as in Claim 1, **characterised in that** the covering is graphite.

3. Torque damping device as in Claim 1, **characterised in that** the covering is an organic material.

4. Torque damping device as in Claim 3, **characterised in that** the covering is a polymer (polytetrafluorethylene).

5. Torque damping device as in Claim 3, **characterised in that** the covering is a polyimide or a polyamide.

6. Torque damping device as in Claim 1, **characterised in that** the covering is metallic.

7. Torque damping device as in Claim 6, **characterised in that** the covering is formed from laminated zinc particles.

8. Torque damping device as in Claim 6, **characterised in that** the covering is quasi-crystalline in nature.

9. Torque damping device as in Claim 8, **characterised in that** the quasi-crystalline covering includes atoms of aluminium.

10. Torque damping device as in Claim 1, **characterised in that** the said at least one elastic contrivance (34) is articulated with the first mass (1) via a first shaft (6) and with the second mass (2) via a second shaft (7), at least one of the first (6) and second (7) shafts exhibiting the said friction plate with which the elastic contrivance (34) is articulated.

11. Torque d amping device as in Claim 10, **characterised in that** the first and second shafts both exhibit the said friction plate.

12. Torque damping device as in either of Claims 10 or 11, **characterised in that** the said friction plate is in contact with a bearing (9, 14) in a friction material supported by the elastic contrivance (34).

13. Torque damping device as in any of Claims 10 to 12, in which the two masses (1, 2) can move relative to one another via a friction material bearing interposed radially, with a hub an integral part of one of the masses and an internal boring in the other mass, **characterised in that** the said bearing is in contact with the said hub and/or the said boring which the said friction plate exhibits.

14. Torque damping device as in either of Claims 12 or 13, **characterised in that** the friction material is a plastic material.

15. Torque damping device as in Claim 14, **characterised in that** the plastic material is a polyimide.

16. Torque damping device as in Claim 14, **characterised in that** the plastic material is a polymer (ether ether ketone).

17. Torque damping device as in Claim 1, **characterised in that** the said one of the masses (1, 2) is the second mass (2) and the at least one friction surface rotates as an integral part of the first mass (1).

## Patentansprüche

1. Torsionsdämpfervorrichtung, u mfassend zwei koaxiale Massen (1, 2), die im Verhältnis zueinander beweglich einerseits entgegen elastischen Mitteln (3), die wenigstens ein insgesamt radial zwischen den besagten Massen eingesetztes und gelenkig an der einen und der anderen von ihnen gelagertes elastisches Organ (34) umfassen, und andererseits entgegen axial wirksamen Reibungsmitteln (4) gelenkig gelagert sind, wobei eine (1) der Massen (1, 2), die als erste Masse bezeichnet wird, drehfest an einer treibenden Welle angebracht werden kann, während die andere (2) der Massen (1, 2), die als zweite Masse bezeichnet wird, die Gegenanpreßplatte einer Kupplung bildet, wobei die Reibungsmittel (4) axial zwischen der ersten Masse (1) und den besagten elastischen Mitteln (3) angeordnet sind, wobei wenigstens eine der Gelenkverbindungen ein Gegenelement verwendet, das eine Reibauflagefläche umfasst, die dazu bestimmt ist, reibschlüssig mit einem Reibwerkstoff zusammenzuwirken,
**dadurch gekennzeichnet,**
**dass** die besagte Reibauflagefläche aus einer Festschmierstoffbeschichtung besteht, deren dynamischer Reibungskoeffizient höchstens gleich 0,25 ist.

2. Torsionsdämpfervorrichtung nach Anspruch 1, **dadurch gekennzeichnet, dass** es sich bei der Beschichtung um Graphit handelt.

3. Torsionsdämpfervorrichtung nach Anspruch 1, **dadurch gekennzeichnet, dass** es sich bei der Beschichtung um einen organischen Stoff handelt.

4. Torsionsdämpfervorrichtung nach Anspruch 3, **dadurch gekennzeichnet, dass** es sich bei der Beschichtung um Poly(tetrafluorethylen) handelt.

5. Torsionsdämpfervorrichtung nach Anspruch 3, **dadurch gekennzeichnet, dass** es sich bei der Beschichtung um ein Polyimid oder ein Polyamid handelt.

6. Torsionsdämpfervorrichtung nach Anspruch 1, **dadurch gekennzeichnet, dass** die Beschichtung aus Metall ausgeführt ist.

7. Torsionsdämpfervorrichtung nach Anspruch 6, **dadurch gekennzeichnet, dass** die Beschichtung aus plättchenförmigen Zinkteilchen besteht.

8. Torsionsdämpfervorrichtung nach Anspruch 6, **dadurch gekennzeichnet, dass** die Beschichtung quasikristallin ausgeführt ist.

9. Torsionsdämpfervorrichtung nach Anspruch 8, **dadurch gekennzeichnet, dass** die quasikristalline Beschichtung Aluminiumatome enthält.

10. Torsionsdämpfervorrichtung nach Anspruch 1, **dadurch gekennzeichnet, dass** das besagte wenigstens eine elastische Organ (34) an der ersten Masse (1) über eine erste Achse (6) und an der zweiten Masse (2) über eine zweite Achse (7) gelenkig gelagert ist, wobei wenigstens eine der ersten (6) und zweiten (7) Achsen die besagte Reibauflagefläche aufweist, mit der das elastische Organ (34) gelenkig zusammenwirkt.

11. Torsionsdämpfervorrichtung nach Anspruch 10, **dadurch gekennzeichnet, dass** die erste (6) und die zweite (7) Achse beide die besagte Reibauflagefläche aufweisen.

12. Torsionsdämpfervorrichtung nach einem der Ansprüche 10 oder 11, **dadurch gekennzeichnet, dass** die besagte Reibauflagefläche reibschlüssig mit einem an dem elastischen Organ (34) angebrachten Lager (9, 14) aus Reibwerkstoff zusammenwirkt.

13. Torsionsdämpfervorrichtung nach einem der Ansprüche 10 bis 12, in dem die beiden Massen (1, 2) im Verhältnis zueinander beweglich anhand eines Lagers aus Reibwerkstoff gelagert sind, das radial zwischen einer fest mit einer der Massen verbundenen Nabe und einer Innenbohrung der anderen der Massen eingefügt ist, **dadurch gekennzeichnet, dass** das besagte Lager reibschlüssig mit der besagten Nabe und/oder der besagten Bohrung zusammenwirkt, welche die besagte Reibauflagefläche aufweist.

14. Torsionsdämpfervorrichtung nach einem der Ansprüche 12 oder 13, **dadurch gekennzeichnet , dass** der Reibwerkstoff ein Kunststoff ist.

15. Torsionsdämpfervorrichtung nach Anspruch 14, **dadurch gekennzeichnet, dass** der Kunststoff ein Polyimid ist.

16. Torsionsdämpfervorrichtung nach Anspruch 14, **dadurch gekennzeichnet, dass** der Kunststoff Poly(etheretherketon) ist.

17. Torsionsdämpfervorrichtung nach Anspruch 1, **dadurch gekennzeichnet, dass** die besagte eine der Massen (1, 2) die zweite Masse (2) ist und die wenigstens eine Reibfläche drehfest mit der ersten Masse (1) verbunden ist.
